# EUROPÄISCHE PATENTSCHRIFT

(11) **EP 1 946 631 B1**
(45) Veröffentlichungstag und Bekanntmachung des Hinweises auf die Patenterteilung: **23.03.2011**
(21) Anmeldenummer: 08100424.4
(22) Anmeldetag: 14.01.2008
(51) Int. Cl.: A01D 41/127

(54) **Landwirtschaftliche Arbeitsmaschine**
Agricultural work machine
Machine de travail agricole

(30) Priorität: 24.01.2007 DE 102007004576
(43) Veröffentlichungstag der Anmeldung: 23.07.2008
(73) Patentinhaber: CLAAS Selbstfahrende Erntemaschinen GmbH, 33428 Harsewinkel (DE)
(72) Erfinder: Hugenroth, Ludger, 48346, Ostbevern (DE)
(74) Vertreter: Schütte, Hartmut

(56) Entgegenhaltungen:
- EP-A- 1 419 687
- EP-A- 1 658 765
- US-A- 4 458 471
- US-A1- 2005 279 070

## Beschreibung

Die Erfindung betrifft ein Verfahren zum Betreiben einer landwirtschaftlichen Arbeitsmaschine, insbesondere eines Feldhäckslers, nach dem Oberbegriff des Anspruchs 1 sowie eine landwirtschaftliche Arbeitsmaschine zur Durchführung des Verfahrens nach dem Oberbegriff des Anspruchs 7.

Aus der DE 35 05 887 ist ein Verfahren zur Erntegutdurchsatzregelung bekannt geworden, welches die Durchsatzleistung einer als Feldhäcksler ausgeführten landwirtschaftlichen Arbeitsmaschine durch Überwachung der Drehzahl der Häckseltrommel regelt. Nach dem dort offenbarten Verfahren, wird der Antriebsmotor des Feldhäckslers in üblicher Weis in einem Drehzahlbereich betrieben, bei dem die maximale Motorleistung verfügbar ist. In Abhängigkeit von dem von der landwirtschaftlichen Arbeitsmaschine zu verarbeitenden Erntegutdurchsatz und der verfügbaren Motorleistung schwankt die voreinstellbare Drehzahl der Häckseltrommel. Unterschreitet die Drehzahl der Häckseltrommel einen voreingestellten Minimalwert, wird über geeignete Regeleinrichtungen die Fahrgeschwindigkeit und damit auch die Menge an neu aufgenommenen Erntegut solange reduziert, bis die Drehzahl der Häckseltrommel wieder in einen Drehzahlbereich gelangt, der oberhalb des voreingestellten Minimalwertes liegt. In analoger Weise wird die Fahrgeschwindigkeit der landwirtschaftlichen Arbeitsmaschine dann erhöht, wenn das von der verfügbaren Motorleistung bereitgestellte Drehmoment über dem zum Betreiben des Feldhäckslers erforderlichen Drehmoment liegt, wobei auch in diesem Fall mit Schwellwerten gearbeitet wird, bei deren Über- oder Unterschreitung eine Änderung der Fahrgeschwindigkeit des Feldhäckslers bewirkt wird.

Ein ähnliches Verfahren zur Durchsatzregelung an einem Feldhäcksler wird in der EP 1 051 898 beschrieben, wobei hier der Antriebsmotor mit nahezu konstanter Motordrehzahl betrieben werden soll, während der von der landwirtschaftlichen Arbeitsmaschine zu bearbeitende Erntegutdurchsatz in Abhängigkeit von dem mit der nahezu konstanten Motorleistung korrespondierenden, von dem Antriebsmotor bereitgestellten Drehmoment geregelt wird. Diese Regelung erfolgt dann in der Weise, dass entweder die Fahrgeschwindigkeit angepasst, bei Überlastung reduziert, oder die Drehzahl der Einzugswalzen verändert, bei Überlastung ebenfalls reduziert wird, wobei hierfür im Weiteren der Einsatz von Fuzzy-Logik vorgeschlagen wird.

Beiden Methoden haftet im Wesentlichen der Nachteil an, dass der Antriebsmotor stets im Bereich hoher Motordrehzahlen betrieben wird, die wegen der in der Regel festen Übersetzungsverhältnisse zwischen dem Antriebsmotor und den von ihm angetriebenen Arbeitsorganen eine starke Beschleunigung des Erntegutes bewirken, sodass das Erntegut mit sehr hoher Geschwindigkeit durch die landwirtschaftliche Arbeitsmaschine gefördert wird. Je größer die zu befördernde Erntegutmenge, der Erntegutdurchsatz, wird, umso größer wird der Leistungsbedarfsanteil zur Beschleunigung des Erntegutes und zur Überwindung der geschwindigkeitsproportionalen Reibung des Erntegutes innerhalb der landwirtschaftlichen Arbeitsmaschine. Beide Effekte begrenzen einerseits die Möglichkeiten der Erntegutdurchsatzsteigerung erheblich und führen andererseits auch dazu, dass der Antriebsmotor der landwirtschaftlichen Arbeitsmaschine wegen der hohen Motordrehzahlen in einem Bereich erhöhten Kraftstoffverbrauchs betrieben werden muss.

Aus der US 4,458,471 geht eine landwirtschaftliche Arbeitsmaschine hervor, bei der durch Erhöhung der Getriebeübersetzung eine Erhöhung der Fahrgeschwindigkeit der landwirtschaftlichen Arbeitsmaschine erzielt wird.

Es ist deshalb Aufgabe der Erfindung die beschriebenen Nachteile des Standes der Technik zu vermeiden und insbesondere ein Verfahren und eine landwirtschaftliche Arbeitsmaschine zur Durchführung des Verfahrens vorzuschlagen, bei denen hohe Erntegutdurchsätze bei niedrigerem spezifischen Energiebedarf realisierbar sind. Diese Aufgabe wird erfindungsgemäß durch die kennzeichnenden Merkmale der Ansprüche 1 und 7 gelöst.

Das erfindungsgemäße Verfahren zum Betreiben einer landwirtschaftlichen Arbeitsmaschine, insbesondere Feldhäcksler, welcher zumindest eine Vorrichtung zum Aufnehmen von Erntegut umfasst und das aufgenommene Erntegut an wenigstens ein Einzugsorgan übergeben wird, welches das Erntegut zumindest einem nachgeordneten, das Erntegut bearbeitenden Arbeitsorgan zuführt und die landwirtschaftliche Arbeitsmaschine zumindest einen eine Motorsteuerung umfassenden Antriebsmotor umfasst, der zumindest das Einzugsorgan und das wenigstens eine Arbeitsorgan antreibt zeichnet sich dadurch aus, dass die landwirtschaftliche Arbeitsmaschine den maximalen Erntegutdurchsatz bei reduzierter Motordrehzahl und gleichzeitig erhöhter Fahrgeschwindigkeit bewältigt. Auf diese Weise wird sichergestellt, dass die landwirtschaftliche Erntemaschine hohe Erntegutdurchsätze bei niedrigerem spezifischen Energiebedarf verarbeiten kann. Dieser Effekt wird insbesondere dadurch erzielt, dass der Antriebsmotor mit einer niedrigeren Motorleistung und einem verbesserten spezifischen Kraftstoffverbrauch betrieben wird. Zugleich führt die niedrigere Motordrehzahl wegen der reduzierten Drehzahl der Arbeitsorgane dazu, dass das Erntegut weniger intensiv beschleunigt wird, sodass insbesondere der Energiebedarf zur Beschleunigung des Erntegutes abnimmt, was letztlich zu der geringeren von dem Antriebsmotor bereitzustellenden Motorleistung führt.

Mit zur Erfindung gehört, dass die reduzierte Motordrehzahl einen Teillastbetriebspunkt definiert, dessen Drehzahlbereich unterhalb der den Volllastbetriebspunkt definierenden Motordrehzahl der maximalen Motorleistung liegt, sodass die nunmehr niedrigere Motordrehzahl auch zu einem niedrigeren Kraftstoffbedarf führt.

Eine besonders kraftstoffsparende Umsetzung eines hohen Erntegutdurchsatzes wird dann erreicht, wenn die reduzierte Motordrehzahl etwa 10..15 % unter der Motordrehzahl der maximalen Motorleistung liegt. Diese kraftsoffsparende Umsetzung eines hohen Emtegutdurchsatzes wird auch dadurch noch begünstigt, wenn zugleich die im Teillastbetriebspunkt angehobene Fahrgeschwindigkeit in einem Bereich von 20..30% über der Fahrgeschwindigkeit beim Betreiben des zumindest einen Antriebsmotors in dem den Volllastbetriebspunkt definierenden Drehzahlbereich der maximalen Motorleistung liegt.

Eine besonders vorteilhafte Ausgestaltung der Erfindung ergibt sich dann, wenn das erfindungsgemäße Verfahren die Schritte:
a.) Ermittlung des maximale Erntegutdurchsatzes durch Betreiben des Feldhäckslers im Drehzahlbereich der maximalen Motorleistung
b.) Anheben der Fahrgeschwindigkeit der landwirtschaftlichen Arbeitsmaschine bei gleichzeitiger Reduzierung der Motordrehzahl
c.) Wiederholung des Schrittes b bis der im Schritt a ermittelte maximale Erntegutdurchsatz erreicht wird
umfasst.

Eine derartige Struktur des erfindungsgemäßen Verfahrens hat insbesondere den Vorteil, dass der energieoptimierte Betriebspunkt der landwirtschaftlichen Arbeitsmaschine systematisch und damit schnell ermittelt wird.

Eine erhebliche Entlastung des Betreibers der landwirtschaftlichen Arbeitsmaschine wird in einer vorteilhaften Ausgestaltung der Erfindung dann erreicht, wenn die Schritte a.) bis c.) des erfindungsgemäßen Verfahrens selbsttätig von einer Steuer- und Regeleinheit abgearbeitet werden.

Die signifikantesten Kraftstoffeinspareffekte ergeben sich dann, wenn das erfindungsgemäße Verfahren insbesondere bei einem Erntegut mit hoher Masse bzw. Dichte oder großer Partikelgröße angewendet wird, da hier einerseits wegen der großen zu beschleunigenden Massen hohe Gutbeschleunigungen einen erheblichen Energiebedarf nach sich ziehen. Zum anderen entstehen große Partikel bei großen Schnittlängen, die wiederum einen niedrigeren Energiebedarf für die Zerkleinerung des Erntegutes erfordern, sodass sich dass Verhältnis von notwendiger Zerkleinerungsenergie zu Beschleunigungs- und Reibenergieanteil verschlechtert und folglich der spezifische Energie- und damit Kraftstoffbedarf steigt. Indem die landwirtschaftliche Arbeitsmaschine zumindest eine Motordrehzahlmess- und -anzeigeeinheit und eine Fahrgeschwindigkeitsmess- und -anzeigeeinheit sowie eine Einrichtung zur Messung eines Emtegutdurchsatzes umfasst und wobei eine Steuer- und Regeleinheit vorhanden ist, die zur Speicherung der Motordrehzahl, der Fahrgeschwindigkeit und zur Bestimmung und Speicherung des maximalen Erntedurchsatzes und zur Änderung der Motordrehzahl und der Fahrgeschwindigkeit in der Weise ausgebildet ist, die eine Änderung der Motordrehzahl und der Fahrgeschwindigkeit in der Weise zulässt, dass die landwirtschaftliche Arbeitsmaschine einen maximalen Erntegutdurchsatz durch Reduzieren der Motordrehzahl bei gleichzeitigem Anheben der Fahrgeschwindigkeit bearbeitet, wird eine Vorrichtung bereitgestellt, die es ermöglicht, hohe Erntegutdurchsätze bei niedrigerem spezifischen Energiebedarf zu verarbeiten. In Analogie zu dem erfindungsgemäßen Verfahren wird dieser Effekt insbesondere dadurch erzielt, dass der Antriebsmotor mit einer niedrigeren Motorleistung und einem verbesserten spezifischen Kraftstoffverbrauch betrieben wird. Zugleich führt die niedrigere Motordrehzahl wegen der reduzierten Drehzahl der Arbeitsorgane dazu, dass das Erntegut weniger intensiv beschleunigt wird, sodass insbesondere der Energiebedarf zur Beschleunigung des Erntegutes abnimmt, was letztlich zu der geringeren von dem Antriebsmotor bereitzustellenden Motorleistung führt.

In einer vorteilhaften Ausgestaltung der Erfindung ist die Steuer- und Regeleinheit auch zur Anzeige der Motordrehzahl, der Fahrgeschwindigkeit und des bestimmten maximalen Emtedurchsatzes in der Anzeigeeinheit ausgebildet. Dann sind von dem Betreiber der landwirtschaftlichen Arbeitsmaschine betätigbare Bedienhebel zur Einstellung der Fahrgeschwindigkeit und der Motordrehzahl des Antriebsmotors vorhanden. Auf diese Weise kann das erfindungsgemäße Verfahren mittels der ohnehin in der landwirtschaftlichen Arbeitsmaschine integrierten Bedienelemente realisiert werden.

In einer weiteren vorteilhaften Ausgestaltung der Erfindung umfasst die landwirtschaftliche Arbeitsmaschine Mittel zur Sensierung des Emtegutdurchsatzes und/oder des Kraftstoffverbrauchs. Dabei regelt die Steuer- und Regeleinheit in Abhängigkeit von den generierten Erntegutdurchsatz- und/oder Kraftstoffverbrauchssignalen die Motordrehzahl des wenigstens einen Antriebsmotors und die Fahrgeschwindigkeit der landwirtschaftlichen Arbeitsmaschine. Auf diese Weise wird der Betreiber der landwirtschaftlichen Arbeitsmaschine nahezu vollständig von der Umsetzung des erfindungsgemäßen Verfahrens entlastet Eine besonders effiziente Regelung der landwirtschaftlichen Arbeitsmaschine nach dem erfindungsgemäßen Verfahren wird dann erreicht, wenn das Regelkriterium auf das Betreiben der landwirtschaftlichen Arbeitsmaschine bei maximalem Erntegutdurchsatz beschränkt ist.

Eine besonders effiziente maschinenbauliche Umsetzung des Regelzyklus wird dann sichergestellt, wenn zur Änderung der Motordrehzahl die Steuer- und Regeleinheit mit der Motorsteuerung des wenigstens einen Antriebsmotors und der Steuerung des Fahrantriebs datenaustauschbar gekoppelt ist.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Feldhäcksler ausgebildete landwirtschaftliche Arbeitsmaschine in Seitenansicht
- Figur 2: die schematische Darstellung einer Motorkennlinie
- Figur 3: eine schematische Darstellung des erfindungsgemäßen Verfahrens und der landwirtschaftlichen Arbeitsmaschine zur Umsetzung dieses Verfahrens.

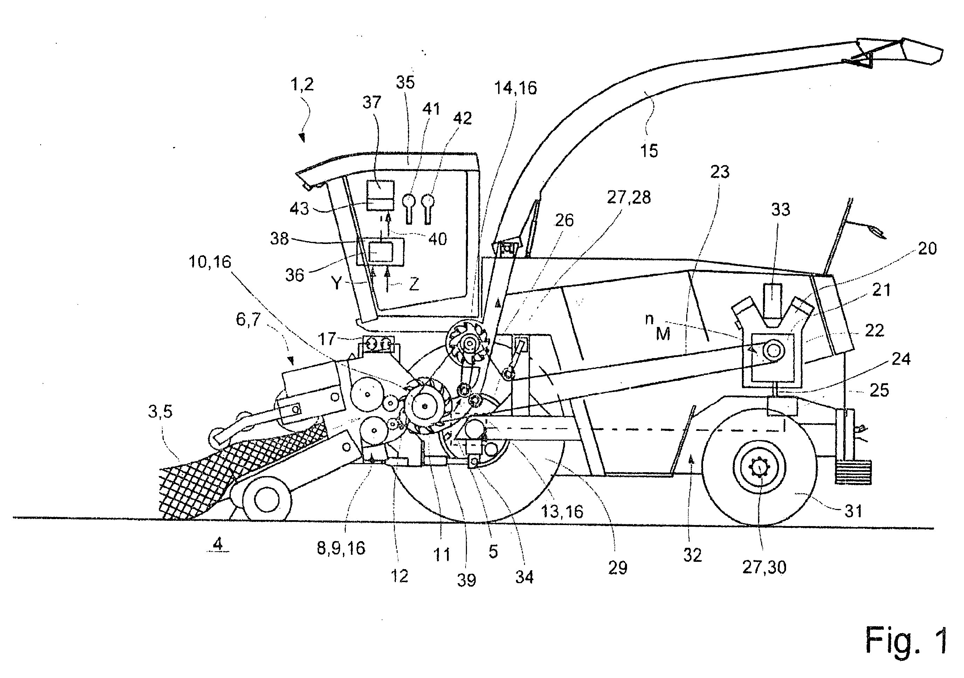

In Fig. 1 ist eine als selbstfahrender Feldhäcksler 2 ausgeführte landwirtschaftliche Arbeitsmaschine 1 abgebildet, der im frontseitigen Bereich zur Aufnahme des in einem Emtegutschwad 3 auf dem Boden 4 abgelegten Erntegutes 5 eine sogenannte Pickup 6 zugeordnet ist. Es liegt im Rahmen der Erfindung, dass an Stelle der Pickup 6 an dem Feldhäcksler 2 ein bellebig gestaltetes Vorsatzgerät 7 zur Aufnahme von Erntegut 5 adaptiert sein kann. In an sich bekannter Weise wird das Erntegut 5 von der Pickup 6 an paarweise angeordnete als Einzugs- und Vorpresswalzen 8 ausgeführte Einzugsorgane 9 übergeben, die das Erntegut 5 zunächst vorverdichten und schließlich in ihrem rückwärtige Bereich an die Häckseltrommel 10 übergeben. Die umlaufenden Messer 11 der Häckseltrommel 10 zerkleinern im Zusammenwirken mit einer ortsfesten Gegenschneide 12 das Erntegut 5 und übergeben es schließlich im rückwärtigen Bereich der Häckseltrommel 10 gegebenenfalls an Nachzerkleinerungsorgane 13, wie etwa sogenannte Korncracker. Die in der Regel ebenfalls paarweise angeordneten und gegensinnig umlaufenden Nachzerkleinerungsorgane 13 übergeben das Erntegut 5 schließlich an einen Nachbeschleuniger 14, der die kinetische Energie des Erntegutes 5 so erhöht, dass das Erntegut 5 einen obenseitig offen Auswurfkrümmer 15 durchlaufen und aus diesem zur Übergabe an ein nicht dargestelltes Transportfahrzeug austreten kann. In Bezug auf die im Folgenden beschriebene Erfindung bilden die Einzugsorgane 9, die Häckseltrommel 10, die Nachzerkleinerungsorgane 13 und der Nachbeschleuniger 14 die Arbeitsorgane 16 des Feldhäckslers 2.

Weiter verfügt der Feldhäcksler 2 über zumindest einen Antriebsmotor 20, der mit einem Hauptgetriebe 21 gekoppelt ist. Über einen ersten Hauptgetriebeausgang 22 wird ein Riementrieb 23 zum Antrieb der Arbeitsorgane 16 mit Antriebsenergie versorgt. In diesem Zusammenhang sei erwähnt, dass der Feldhäcksler auch so ausgestaltet sein kann, dass die Einzugsorgane 9 stufenlos angetrieben werden. In diesem Fall würde eine an sich bekannte und deshalb nicht näher dargestellte Hydromotor-Hydropumpe-Einheit 17 mit verstellbarem Schluckvolumen seine Antriebsenergie über geeignete Übertragungsglieder von dem Riementrieb 23 beziehen. Ein weiterer Hauptgetriebeausgang 24 ist mit einem oder mehreren mechanischen und/oder hydraulischen Getriebestufen 25 gekoppelt, die schließlich in an sich bekannter Weise über geeignete Radantriebe 26 die eine oder mehreren Triebachsen 27 des Feldhäckslers 2 mit Antriebsenergie versorgen. Je nach Ausführung des Feldhäckslers 2 können nur die Vorderachse 28 mit den ihr zugeordneten Laufrädern 29 oder die Hinterachse 30 mit den ihr zugeordneten Laufrädern 31 oder beide als Triebachse 27 ausgestaltet sein. Mithin bilden die Getriebestufen 25, die Radantriebe 26 sowie die Triebachsen 27 und nicht näher dargestellte mechanische und/oder hydraulische Übertragungsglieder allgemein den Fahrantrieb 32 der als Feldhäcksler 2 ausgeführten landwirtschaftlichen Arbeitsmaschine 1.

Dem wenigstens einen Antriebsmotor 20 ist in der Regel bereits herstellerseitig eine Motorsteuerung 33 zugeordnet, die einerseits eine Regelung der Motordrehzahl n_{M} ermöglicht und die andererseits, wie weiter unten noch näher beschrieben, aber auch verschiedene Parameter des Antriebsmotors 20 ermitteln und ausgeben kann. Weiter wird die Fahrgeschwindigkeit v_{f} des Feldhäckslers 2 mittels eines einem Laufrad 29 zugeordneten Drehzahlsensors 34 in der Weise bestimmt, dass das von dem Drehzahlsensor 34 generierte Drehzahlsignal Z an eine beispielsweise in der Fahrerkabine 35 angeordnete Recheneinheit 36 übergeben wird, die dann aus den bekannten geometrischen Beziehungen des Laufrades 29 und der Position des Drehzahlsensors 34 eine Fahrgeschwindigkeit V_{f} ermittelt und in einer mit der Recheneinheit 36 gekoppelten Anzeigeeinheit 37 visualisiert. Es liegt im Rahmen der Erfindung, dass die Recheneinheit 36 Bestandteil einer komplexeren Steuer- und Regeleinheit 38 sein kann, die zugleich noch näher zu beschreibende Parameter der landwirtschaftlichen Arbeitsmaschine 1 in noch näher zu beschreibender Weise ermitteln, überwachen und verändern kann. Weiter ist dem im Ausführungsbeispiel dargestellten Feldhäcksler 2 eine an sich bekannte Durchsatzmesseinrichtung 39, wie etwa in der DE 195 24 752 - deren Inhalt hiermit Bestandteil dieser Beschreibung werden soll - beschrieben, zugeordnet, die ein Erntegutdurchsatzsignal Y generiert, welches ebenfalls an die Recheneinheit 36 oder eine komplexere Steuer- und Regeleinheit 38 übergeben wird. Aus dem Erntegutdurchsatzsignal Y wird dann in an sich bekannter und unter anderem in der DE 195 24 752 beschriebenen Weise ein den Feldhäcksler 2 durchlaufender Erntegutdurchsatz 40 ermittelt, der wiederum in der Anzeigeeinheit 37 visualisierbar ist. Zudem sind in der Fahrerkabine zumindest ein Fahrhebel 41 zur manuellen Änderung der Fahrgeschwindigkeit V_{f} des Feldhäckslers 2 sowie wenigstens ein weiterer Bedienhebel 42 zur Änderung der Motordrehzahl n_{M} angeordnet. Es liegt im Rahmen der Erfindung, dass die Funktionen des Fahrhebels 41 und des beschriebenen Bedienhebels 42 auch in einen einzigen Bedienhebel integriert sein können oder über ein Eingabeterminal 43 anwähl- und editierbar sind.

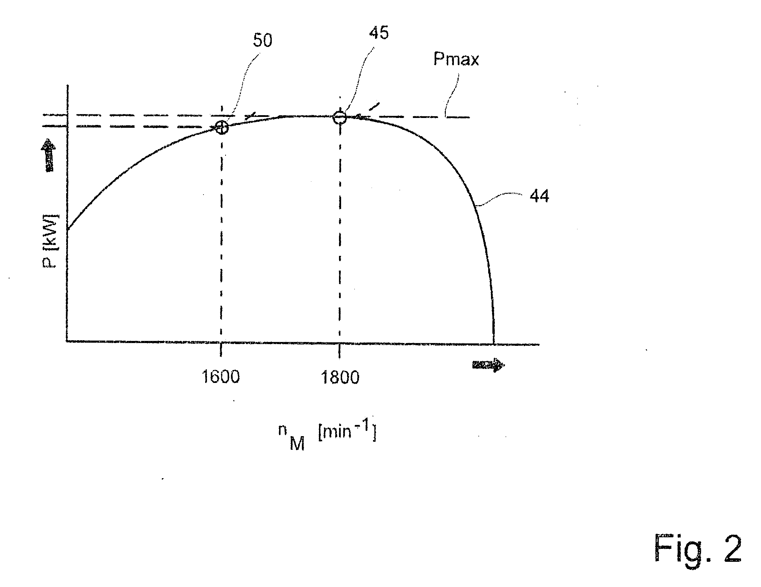

Bei herkömmlich ausgeführten Feldhäckslern 2 wird beim Betrieb des Feldhäckslers 2 in der Regel so vorgegangen, dass über den Bedienhebel 42 zunächst die Motordrehzahl n_{M} eingestellt wird, bei welcher die maximalen Motorleistung Pₘₐₓ verfügbar ist. In Figur 2 ist dieser Zusammenhang an einer beispielhaft gewählten Motorkennlinie 44 dargestellt, wobei hier die maximale Motorleistung von Pₘₐx = 420 kW bei einer Motordrehzahl von n_{M} = 1800 min⁻¹ liegt. In diesem Volllastbetriebspunkt 45 liegt die Fahrgeschwindigkeit v_{f} des Feldhäckslers 2 bei maximal verarbeitbarem Erntegutdurchsatz bei zum Beispiel 6 km/h. Im einfachsten Fall, d.h. ohne sensorische Überwachung der Drehzahl der Häckseltrommel 10 regelt der Betreiber die Fahrgeschwindigkeit v_{f} des Feldhäckslers 2 so, dass ein hörbarer Drehzahlabfall der Häckseltrommel 2 vermieden wird. Aus dem Stand der Technik sind jedoch verschiedenste sensorbasierte Übenrvachungssysteme bekannt, die die dürchsatzabhängige Anpassung der Fahrgeschwindigkeit automatisch vornehmen. Beide Methoden arbeiten jedoch nach dem gleichen Prinzip, nämlich immer dann die Fahrgeschwindigkeit v_{f} und damit den Erntegutdurchsatz 40 zu verringern, wenn die Drehzahl der Häckseltrommel 10 unter einen bestimmten Minimalwert abfällt und umgekehrt immer dann die Fahrgeschwindigkeit v_{f} und damit den Erntegutdurchsatz 40 zu erhöhen, wenn die Drehzahl der Häckseltrommel 10 über einen bestimmten Maximalwert ansteigt oder der benötigte Leistungsbedarf unter dem verfügbaren Leistungsbedarf liegt. Aufgrund dessen, dass der Antriebsmotor 20 dabei stets mit hoher Motordrehzahl n_{M} betrieben wird, wird einerseits ein erheblicher Leistungsbedarfsanteil zur Beschleunigung des Erntegutes und zur Überwindung der geschwindigkeitsproportionalen Reibung benötigt und zudem führt das Betreiben des Antriebsmotors 20 mit hoher Motordrehzahl n_{M} zu einem höheren Kraftstoffverbrauch.

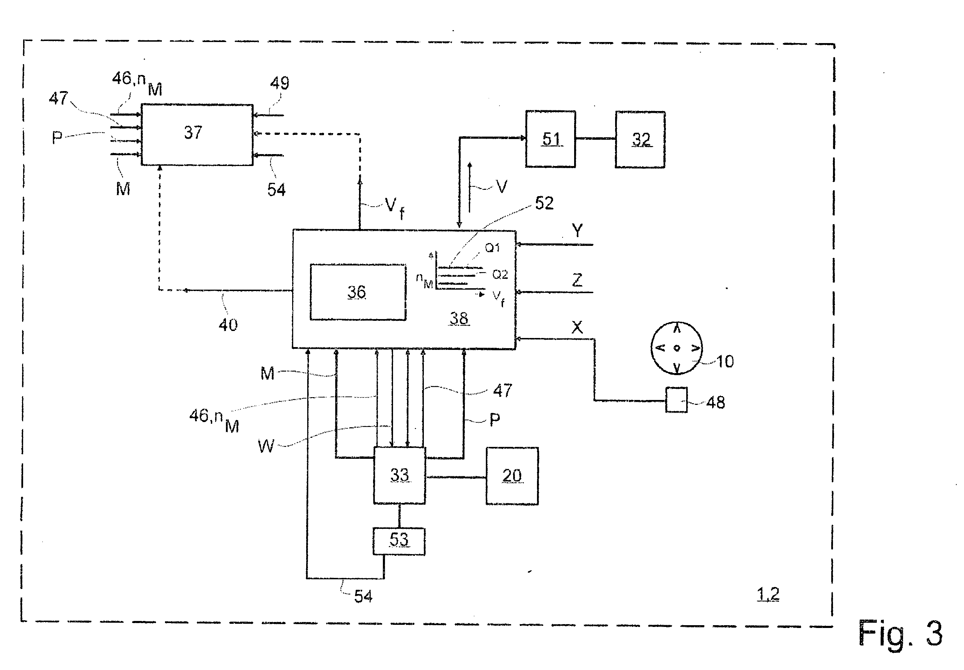

Anhand Figur 3 und unter Einbeziehung der Figur 2 werden nun das erfindungsgemäße Verfahren und die Vorrichtung zur Durchführung dieses Verfahrens im Detail beschrieben. Wie bereits beschrieben, verfügt die als Feldhäcksler 2 ausgeführte landwirtschaftliche Arbeitsmaschine 1 über eine Recheneinheit 36 und/oder eine diese beinhaltende, komplexere Steuer- und Regeleinheit 38, wobei in der weiteren Beschreibung aus Vereinfachungsgründen allein auf die Steuer- und Regeleinheit 38 Bezug genommen wird, gleichwohl sich die weitere Beschreibung in analoger Weise auch auf die Recheneinheit 36 alleine beziehen könnte. Die von dem Drehzahlsensor 34 generierten Drehzahlsignale Z sowie die von der Durchsatzmesseinrichtung 39 generierten Erntegutdurchsatzsignale Y werden von den jeweiligen Sensoren 34, 39 an die Steuer- und Regeleinheit 38 übermittelt. In der Steuer- und Regeleinheit 38 sind in an sich bekannter Weise Algorithmen hinterlegt, die aus den Drehzahlsignalen Z und den Erntegutdurchsatzsignalen Y die Fahrgeschwindigkeit v_{f} der landwirtschaftlichen Arbeitsmaschine 1 sowie den von der landwirtschaftlichen Arbeitsmaschine 1 momentan bearbeiteten Erntegutdurchsatz 40 ermitteln. Sowohl die Fahrgeschwindigkeit v_{f} als auch der ermittelte Durchsatz 40 können, wie bereits beschrieben, in einer Anzeigeeinheit 37 für den Betreiber der landwirtschaftlichen Arbeitsmaschine 1 visualisiert werden, sodass dieser permanent über den aktuellen Wert dieser Parameter unterrichtet ist. Zugleich ist die Steuer- und Regeleinrichtung 38 datenaustauschbar mit der Motorsteuerung 33 des wenigstens einen Antriebsmotors 20 gekoppelt. Die Motorsteuerung 33 ist so eingerichtet, dass sie an die Steuer- und Regeleinrichtung 38 zumindest die momentane Motordrehzahl 46, den momentanen Kraftstoffverbrauch 47, die momentan verfügbare Motorleistung P und analog das momentan verfügbare Motordrehmoment M übermittelt. Es liegt im Rahmen der Erfindung, dass die von der Motorsteuerung 33 übermittelten Parameter 46, 47, P, M ebenfalls in der Anzeigeeinheit 37 visualisierbar sind. Weiter kann der Häckseltrommel 10 eine Drehzahlmesseinrichtung 48 zugeordnet sein, welche ein Häckseltrommeldrehzahlsignal X an die Steuer- und Regeleinheit 38 übermittelt, wobei die daraus ermittelbare Häckseltrommeldrehzahl 49 ebenfalls in der Anzeigeeinheit 37 anzeigbar ist.

Im einfachsten Fall wird das nachfolgend beschriebene erfindungsgemäße Verfahren von dem Betreiber der landwirtschaftlichen Arbeitsmaschine selbst gesteuert. Hierzu wird der Betreiber des Feldhäckslers 2 zunächst mittels des Bedienhebels 42 die Motordrehzahl n_{M} vorwählen, bei der der wenigstens eine Antriebsmotor 20 die maximale Motorleistung Pₘₐₓ zur Verfügung stellt. Im dargestellten Ausführungsbeispiel entspricht dieser Motorbetriebspunkt dem in Figur 2 eingezeichneten Volliastbetriebspunkt 45. Sodann wird die Fahrgeschwindigkeit v_{f} der landwirtschaftliche Arbeitsmaschine 1 während der Erntefahrt solange erhöht, bis der Betriebspunkt des maximal von dem Feldhäcksler bewältigbaren Emtegutdurchsatzes 40 erreicht ist. Dieser maximal bewältigbare Erntegutdurchsatz 40 ist in der Regel dann erreicht, wenn die verfügbare Motorleistung Pₘₐₓ eine weitere Steigerung der Fahrgeschwindigkeit v_{f} nicht mehr zulässt. Ein weiteres Kriterium für das Erreichen des maximalen Erntegutdurchsatzes 40 kann auch der Drehzahlabfall der Häckseltrommel 10 sein, der entweder präzise an der Anzeigeeinheit 37 abgelesen werden kann oder akustisch wahrnehmbar ist. In dem in Figur 2 dargestellten Volliastbetriebspunkt 45 beträgt die Fahrgeschwindigkeit v_{f} bei maximal bewältigbarem Erntegutdurchsatz 40 beispielsweise 6 km/h. Dieser Fahrgeschwindigkeitswert kann von dem Betreiber in der Anzeigeeinheit 37 ebenfalls, wie bereits beschrieben, abgelesen werden. Indem der Betreiber der landwirtschaftlichen Arbeitsmaschine 1 nach Erreichen des maximalen Erntegutdurchsatzes 40 schrittweise durch Betätigen des Fahrhebels 41 die Fahrgeschwindigkeit v_{f} erhöht, sinkt zugleich wegen der begrenzt verfügbaren Antriebsleistung P des Antriebsmotors 20 die Motordrehzahl n_{M}. Diese schrittweise Erhöhung der Fahrgeschwindigkeit v_{f} bei gleichzeitiger Reduzierung der Motordrehzahl n_{M} wird der Betreiber der landwirtschaftlichen Arbeitsmaschine 1 solange wiederholen, bis wieder der zuvor ermittelte maximale Erntegutdurchsatz 40 des Volliastbetriebspunktes 45 erreicht wird. Auf diese Weise wird es möglich, die landwirtschaftliche Arbeitsmaschine 1 wegen der erhöhten Fahrgeschwindigkeit v_{f} mit maximalem Erntegutdurchsatz 40 zu beaufschlagen und zugleich den Antriebsmotor 20 in einem weniger Kraftstoff verbrauchenden Teillastbereich zu betreiben. In dem in Figur 2 dargestellten Beispiel liegt dieser Teillastbetriebspunkt 50 bei einer Motordrehzahl von n_{M} = 1600 min⁻¹, wobei die Fahrgeschwindigkeit v_{f} des Feldhäckslers 2 in diesem Teillastbetriebspunkt 50 beispielsweise 8 km/h beträgt. In diesem Zusammenhang hat es sich als vorteilhaft erwiesen, wenn die Motordrehzahl n_{M} in diesem Teillastbetriebspunkt 50 in einem Bereich von 10-15 % der Motordrehzahl n_{M} im Volllastbetriebspunkt 45 beträgt. In Bezug auf die Fahrgeschwindigkeit v_{f} stellen sich dann vorteilhafte Bedingungen ein, wenn die Fahrgeschwindigkeit v_{f} im Teillastbetriebspunkt 50 ca. 20-30% über der Fahrgeschwindigkeit v_{f} im Volllastbetriebspunkt 45 liegt.

Sofern der Feldhäcksler 2 über die beschriebene Durchsatzmesseinrichtung 39 verfügt, können die oben beschriebenen Einstellschritte für die Fahrgeschwindigkeit v_{f} und die Motordrehzahl n_{M} auch unmittelbar in Abhängigkeit von dem in der Anzeigeeinheit 37 visualisierten Erntegutdurchsatz 40 von dem Betreiber der landwirtschaftlichen Arbeitsmaschine 1 vorgenommen werden. Im einfachsten Fall werden die Einstellschritte des erfindungsgemäßen Verfahrens dann solange wiederholt, bis der in der Anzeigeeinheit 37 visualisierte Erntegutdurchsatz 40 im Teillastbetriebspunkt 50 mit dem Erntegutdurchsatz 40 im Volllastbetriebspunkt 45 nahezu übereinstimmt.

Indem die Steuer- und Regeleinheit 38 auch mit der dem Fahrantrieb 28 zugeordneten Fahrantriebssteuerung 51 datenaustauschbar gekoppelt ist, kann zudem eine nachfolgend näher beschriebene automatische Anpassung der Fahrgeschwindigkeit v_{f} und der Motordrehzahl n_{M} vorgenommen werden. In diesem Fall würde zunächst wiederum der maximal bewältigbare Durchsatz 40 in der oben beschriebenen Weise ermittelt, wobei die Steuer- und Regeleinheit 38 je nach Ausstattungsgrad des Feldhäckslers 2 die Motordrehzahl n_{M} des Antriebsmotors 20 und die Fahrgeschwindigkeit v_{f} des Feldhäckslers 2 sowie den maximalen Erntegutdurchsatz 40 ermittelt, abspeichert und in der Anzeigeeinheit 37 visualisiert. In einem nächsten Schritt generiert die Steuer- und Regeleinheit ein Fahrgeschwindigkeitssignal V zur Erhöhung der Fahrgeschwindigkeit v_{f} sowie ein Motordrehzahlsignal W zur Reduzierung der Motordrehzahl n_{M}, wobei diese Schritte solange wiederholt werden bis der zuvor ermittelte maximale Erntegutdurchsatz 40 wieder erreicht ist. Aufgrund dessen, dass die Reduzierung der Motordrehzahl n_{M} zur Reduzierung der Drehzahlen der verschiedenen Arbeitsorgane 16 des Feldhäckslers 2 führt, reduziert sich die Einzugsgeschwindigkeit der Einzugs- und Vorpresswalzen 8 und der Erntegutdurchsatz 40 würde abnehmen. Indern die Fahrgeschwindigkeit v_{f} aber erhöht wird, nimmt der Feldhäcksler 2 nun in einem definierten Zeitintervall mehr Erntegut 5 auf, sodass der erntegutdurchsatzreduzierende Effekt einer niedrigeren Motordrehzahl n_{M} durch die höhere Fahrgeschwindigkeit v_{f} ausgleichbar ist. Da die mathematischen Zusammenhänge zwischen Fahrgeschwindigkeit v_{f}, Drehzahl der Einzugsorgane und Erntegutdurchsatz bekannt sind, können nun in der Steuer- und Regeleinheit 38 Kennlinien 52 hinterlegt sein, die für einen konstanten Erntegutdurchsatz 40 die notwenigen Fahrgeschwindigkeiten v_{f} und Motordrehzahlen n_{M} definieren. Derartige Kennlinien 52 haben insbesondere den Vorteil, dass eine Durchsatzmesseinrichtung 39 entbehrlich wird.

Eine besonders effiziente Umsetzung des erfindungsgemäßen Verfahrens ergibt sich dann, wenn das Verfahren insbesondere bei einem Erntegut 5 mit hoher Masse bzw. Dichte oder großer Partikelgröße angewendet wird. Ersteres ist beispielsweise dann der Fall, wenn ein sehr feuchtes Erntegut 5 geerntet und an der Häckseltrommel 10 eine sehr starke Zerkleinerung (kurze Schnittlänge) des Erntegutes 5 realisiert wird. Wegen des hohen Wasseranteils und der guten Schichtung kurzer Erntegutpartikel hat einen solches Erntegut 5 eine hohe Dichte, was letztlich dazu führt, dass große Massen beschleunigt werden müssen und die hierfür erforderliche Beschleunigungsenergie um so geringer sein wird je langsamer ein derartig strukturiertes Erntegut 5 durch den Feldhäcksler 2 gefördert werden kann. Zum anderen entstehen große Partikel bei großen Schnittlängen, die wiederum einen niedrigeren Energiebedarf für die Zerkleinerung des Erntegutes erfordern, sodass sich dass Verhältnis von notwendiger Zerkleinerungsenergie, zu Beschleunigungs- und Reibenergieanteil verschlechtert und folglich der spezifische Energie- und damit Kraftstoffbedarf dann steigen würde, wenn der Antriebsmotor 20 weiter im Bereich hoher Motordrehzahlen n_{M} betrieben würde.

Verfügt der Feldhäcksler 2 in einer weiteren vorteilhaften Ausgestaltung der Erfindung zudem über eine Kraftstoffverbrausmesseinrichtung 53, die gemäß Figur 3 beispielsweise unmittelbar Bestandteil der Motorsteuerung 33 sein kann, so kann das erfindungsgemäße Verfahren und die zugehörige Vorrichtung auch unmittelbar den Kraftstoffverbrauch berücksichtigen. Dies kann beispielsweise so erfolgen, dass der ermittelte momentane Kraftstoffverbrauch 54 an die Steuer- und Regeleinheit 38 und gegebenenfalls von dieser an die Anzeigeeinheit 37 zur Visualisierung übermittelt wird. Sodann kann entweder der Betreiber der landwirtschaftlichen Arbeitsmaschine 1 oder die Steuer- und Regeleinheit 38 bei der Reduzierung der Motordrehzahl n_{M} und der Erhöhung der Fahrgeschwindigkeit v_{f} zugleich einen Teillastbetriebspunkt 50 bestimmen, der bei Bewältigung des maximalen Emtegutdurchsatzes 40 den optimalsten Kraftstoffverbrauch sicherstellt.

### Bezugszeichenliste:

- 1: landwirtschaftliche Arbeitsmaschine
- 2: Feldhäcksler
- 3: Erntegutschwad
- 4.: Boden
- 5: Erntegut
- 6: Pickup
- 7: Vorsatzgerät
- 8: Einzugs- und Vorpresswalzen
- 9: Einzugsorgan
- 10: Häckseltrommel
- 11: Messer
- 12: Gegenschneide
- 13: Nachzerkleinerungsorgan
- 14: Nachbeschleuniger
- 15: Auswurfkrümmer
- 16: Arbeitsorgan
- 17: Hydromotor-Hydropumpe-Einheit
- 18:
- 19:
- 20: Antriebsmotor
- 21: Hauptgetriebe
- 22: 1. Hauptgetriebeausgang
- 23: Riementrieb
- 24: weiterer Hauptgetriebeausgang
- 25: Getriebestufe
- 26: Radantrieb
- 27: Triebachse
- 28: Vorderachse
- 29: Laufrad
- 30: Hinterachse
- 31: Laufrad
- 32: Fahrantrieb
- 33: Motorsteuerung
- 34: Drehzahlsensor
- 35: Fahrerkabine
- 36: Recheneinheit
- 37: Anzeigeeinheit
- 38: Steuer- und Regeleinheit
- 39: Durchsatzmesseinrichtung
- 40: Erntegutdurchsatz
- 41: Fahrhebel
- 42: Bedienhebel
- 43: Eingabeterminal
- 44: Motorkennlinie
- 45: Volllastbetriebspunkt
- 46: Motordrehzahl
- 47: Kraftstoffverbrauch
- 48: Drehzahlmesseinrichtung
- 49: Häckseltrommeldrehzahl
- 50: Teillastbetriebspunkt
- 51: Fahrantriebssteuerung
- 52: Kennlinie
- 53: Kraftstoffverbrauchsmesseinrichtung
- 54: Kraftstoffverbrauch

- n_{M}: Motordrehzahl
- v_{f}: Fahrgeschwindigkeit
- M: Motordrehmoment
- P: Motorleistung
- V: Fahrgeschwindigkeitssignal
- W: Motordrehzahlsignal
- X: Häckseltrommeldrehzahlsignal
- Y: Durchsatzsignal
- Z: Drehzahlsignal

## Patentansprüche

1. Verfahren zum Betreiben einer landwirtschaftlichen Arbeitsmaschine, insbesondere Feldhäcksler, wobei die landwirtschaftliche Arbeitsmaschine zumindest eine Vorrichtung zum Aufnehmen von Erntegut umfasst und das aufgenommene Erntegut an wenigstens ein Einzugsorgan übergeben wird, welches das Erntegut zumindest einem nachgeordneten, das Erntegut bearbeitenden Arbeitsorgan zuführt und wobei die landwirtschaftliche Arbeitsmaschine zumindest einen eine Motorsteuerung umfassenden Antriebsmotor umfasst, der zumindest das Einzugsorgan und das wenigstens eine Arbeitsorgan antreibt,
**dadurch gekennzeichnet,**
**dass** das Betreiben der landwirtschaftlichen Arbeitsmaschine (1, 2) bei maximalem Erntegutdurchsatz (Y, 40) durch Reduzieren der Motordrehzahl (n_{M}, 46) bei gleichzeitigem Anheben der Fahrgeschwindigkeit (v_{f}) bewirkt wird, wobei die reduzierte Motordrehzahl (n_{M}, 46) einen Teillastbetriebspunkt (50) definiert, dessen Drehzahlbereich unterhalb der den Volllastbetriebspunkt (45) definierenden Motordrehzahl (n_{M}, 46) der maximalen Motorleistung (Pₘₐₓ) liegt.

2. Verfahren zum Betreiben einer landwirtschaftlichen Arbeitsmaschine, insbesondere Feldhäcksler, nach Anspruch 1,
**dadurch gekennzeichnet,**
**dass** die reduzierte Motordrehzahl (n_{M}, 46) etwa 10..15 % unter der Motordrehzahl (n_{M}, 46) der maximalen Motorleistung (Pₘₐₓ) liegt.

3. Verfahren zum Betreiben einer landwirtschaftlichen Arbeitsmaschine, insbesondere Feldhäcksler, nach Anspruch 1 oder 2,
**dadurch gekennzeichnet,**
**dass** die im Teillastbetriebspunkt (50) angehobene Fahrgeschwindigkeit (v_{f}) in einem Bereich von 20..30% über der Fahrgeschwindigkeit (v_{f}) beim Betreiben des zumindest einen Antriebsmotors (20) in dem den Volllastbetriebspunkt (45) definierenden Drehzahlbereich der maximalen Motorleistung (Pₘₐₓ) liegt.

4. Verfahren zum Betreiben einer landwirtschaftlichen Arbeitsmaschine, insbesondere Feldhäcksler, nach einem der vorhergehenden Ansprüche,
**dadurch gekennzeichnet,**
**dass** das Verfahren die folgenden Schritte umfasst:
a.) Ermittlung des maximale Emtegutdurchsatzes (Y, 40) durch Betreiben der landwirtschaftlichen Arbeitsmaschine (1, 2) im Drehzahlbereich der maximalen Motorleistung (Pₘₐₓ)
b.) Anheben der Fahrgeschwindigkeit (v_{f}) der landwirtschaftlichen Arbeitsmaschine (1, 2) bei gleichzeitiger Reduzierung der Motordrehzahl (n_{M}, 46)
c.) Wiederholung des Schrittes b bis der im Schritt a ermittelte maximale Erntegutdurchsatz (Y, 40) erreicht wird.

5. Verfahren zum Betreiben einer landwirtschaftlichen Arbeitsmaschine, insbesondere Feldhäcksler, nach Anspruch 4,
**dadurch gekennzeichnet,**
**dass** die Schritte a.) bis c.) selbsttätig von einer Steuer- und Regeleinheit (38, 36) abgearbeitet werden.

6. Verfahren zum Betreiben einer landwirtschaftlichen Arbeitsmaschine, insbesondere Feldhäcksler, nach einem der vorhergehenden Ansprüche,
**dadurch gekennzeichnet,**
**dass** das Verfahren insbesondere bei einem Erntegut (5) mit hoher Masse bzw. Dichte oder großer Partikelgröße angewendet wird.

7. Landwirtschaftliche Arbeitsmaschine, insbesondere Feldhäcksler, wobei die landwirtschaftliche Arbeitsmaschine zumindest eine Vorrichtung zum Aufnehmen von Erntegut umfasst und das aufgenommene Erntegut an wenigstens ein Einzugsorgan übergeben wird, welches das Erntegut zumindest einem nachgeordneten, das Erntegut bearbeitenden Arbeitsorgan zuführt und wobei die landwirtschaftliche Arbeitsmaschine zumindest einen eine Motorsteuerung umfassenden Antriebsmotor umfasst, der zumindest das Einzugsorgan und das wenigstens eine Arbeitsorgan antreibt, und wobei die landwirtschaftliche Arbeitsmaschine (1, 2) zumindest eine Einheit zur Messung einer Motordrehzahl (n_{M}) und eine Einheit zur Anzeige (33, 37) der Motordrehzahl (n_{M}) und eine Einheit zur Messung einer Fahrgeschwindigkeit (v_{f}) und eine Einheit zur Anzeige (34,36) der Fahrgeschwindigkeit (v_{f}) sowie eine Einrichtung zur Messung eines Erntegutdurchsatzes (40) umfasst, **gekennzeichnet durch** eine Steuer- und Regeleinheit (38), die zur Speicherung der Motordrehzahl (n_{M}), der Fahrgeschwindigkeit (v_{f}) und zur Bestimmung und Speicherung des maximalen Erntedurchsatzes (40) und zur Änderung der Motordrehzahl (n_{M}, 46) und der Fahrgeschwindigkeit (v_{f}) in der Weise ausgebildet ist, dass ein maximaler Erntegutdurchsatz (40) **durch** Reduzieren der Motordrehzahl (n_{M}, 46) bei gleichzeitigem Anheben der Fahrgeschwindigkeit (v_{f}) einstellbar ist, wobei über die reduzierte Motordrehzahl (n_{M}, 46) ein Teillastbetriebspunkt (50) definierbar ist, dessen Drehzahlbereich unterhalb der den Volllastbetriebspunkt (45) definierenden Motordrehzahl (n_{M}, 46) der maximalen Motorleistung (Pₘₐₓ) liegt.

8. Landwirtschaftliche Arbeitsmaschine, nach Anspruch 7, **dadurch gekennzeichnet, dass** die Steuer- und Regeleinheit (38) zur Ausgabe eines Fahrgeschwindigkeitssignals (V) zur Erhöhung der Fahrgeschwindigkeit und zur Ausgabe eines Motordrehzahlsignals (W) zur Reduzierung der Motordrehzahl (n_{M}) ausgebildet ist.

9. Landwirtschaftliche Arbeitsmaschine nach Anspruch 7 oder 8, **dadurch gekennzeichnet, dass** die Steuer- und Regeleinheit (38, 36) mit der Motorsteuerung (33) des wenigstens einen Antriebsmotors (20) und einer der Steuerung (51) des Fahrantriebs (32) datenaustauschbar gekoppelt ist.

10. Landwirtschaftliche Arbeitsmaschine, nach Anspruch 9, **dadurch gekennzeichnet, dass** die Motorsteuerung (33) zur Übermittelung der Motordrehzahl (n_{M}) und eines Kraftstoffverbrauchs ausgebildet ist.

11. Landwirtschaftliche Arbeitsmaschine nach einem der Ansprüche 7 bis 10, **dadurch gekennzeichnet dass** die Steuer- und Regeleinheit (38) zur Anzeige der Motordrehzahl (n_{M}), der Fahrgeschwindigkeit (v_{f}) und des bestimmten maximalen Emtedurchsatzes (40) in der Anzeigeeinheit (37) ausgebildet ist und dass von dem Betreiber der landwirtschaftlichen Arbeitsmaschine (1, 2) betätigbare Bedienhebel (41, 42) zur Einstellung der Fahrgeschwindigkeit (v_{f}) und der Motordrehzahl (n_{M}, 46) des Antriebsmotors (20) vorhanden sind.

12. Landwirtschaftliche Arbeitsmaschine nach einem der vorhergehenden Ansprüche, **dadurch gekennzeichnet, dass** die landwirtschaftliche Arbeitsmaschine (1, 2) Mittel (39, 53) zur Sensierung des Emtegutdurchsatzes (Y, 40) und/oder des Kraftstoffverbrauchs (54) umfasst und dass die Steuer- und Regeleinheit (38, 36) zur Regelung der Motordrehzahl (n_{M}, 46) des zumindest einen Antriebsmotors (20) und der Fahrgeschwindigkeit (v_{f}) der landwirtschaftlichen Arbeitsmaschine (1, 2) in Abhängigkeit von generierten Erntegutdurchsatz- und/oder Kraftstoffverbrauchssignalen (Y, 40, 54) ausgebildet ist.

13. Landwirtschaftliche Arbeitsmaschine nach Anspruch 12, **dadurch gekennzeichnet,**
**dass** das Regelkriterium das Betreiben der landwirtschaftlichen Arbeitsmaschine (1, 2) bei maximalem Erntegutdurchsatz (40) ist.

## Claims

1. Method for operating an agricultural machine, in particular a field forage harvester, the agricultural machine comprising at least one device for taking up harvested crops wherein the taken up harvested crops are transferred to at least one draw-in element feeding the harvested crops to at least one downstream implement processing the harvested crops and the agricultural machine comprising at least one drive motor comprising a motor control, the drive motor driving at least the draw-in element and the at least one implement,
**characterized in**
**that** operation of the agricultural machine (1, 2) for a maximum harvested crop throughput (Y, 40) is effected by way of concurrently reducing the motor speed (n_{M}, 46) and increasing the traveling speed (v_{f}) wherein the reduced motor speed (n_{M}, 46) defines a part load operating point (50) the rpm range of which lies beneath the motor speed (n_{M}, 46) of the maximum motor power (Pₘₐₓ) defining the full load operating point (45).

2. The method for operating an agricultural machine, in particular a field forage harvester, according to claim 1, **characterized in that** the reduced motor speed (n_{M}, 46) lies approximately 10..15 % beneath the motor speed (n_{M}, 46) of the maximum motor power (Pₘₐₓ).

3. The method for operating an agricultural machine, in particular a field forage harvester, according to claim 1 or 2, **characterized in that** the traveling speed (v_{f}) which is increased at the part load operating point (50) lies in a range of 20..30% above the traveling speed (v_{f}) during operating the at least one drive motor (20) in the speed range of the maximum motor power (Pₘₐₓ) defining the full load operating point (45).

4. The method for operating an agricultural machine, in particular a field forage harvester, according to any of the preceding claims, **characterized in that** the method comprises the following steps:
a) determining the maximum harvested crop throughput (Y, 40) by way of operating the agricultural machine (1, 2) in the rpm range of the maximum motor power (Pₘₐₓ)
b) increasing the traveling speed (v_{f}) of the agricultural machine (1, 2) while concurrently reducing the motor speed (n_{M}, 46)
c) repeating step b until the maximum harvested crop throughput (Y, 40) determined in step a is achieved.

5. The method for operating an agricultural machine, in particular a field forage harvester, according to claim 4, **characterized in that** a control unit (38, 36) executes the steps a) to c) automatically.

6. The method for operating an agricultural machine, in particular a field forage harvester, according to any of the preceding claims, **characterized in that** the method is applied in particular for harvested crops (5) of large mass or high density or large particle sizes.

7. An agricultural machine, in particular a field forage harvester, the agricultural machine comprising at least one device for taking up harvested crops wherein the taken up harvested crops are transferred to at least one draw-in element feeding the harvested crops to at least one downstream implement processing the harvested crops and the agricultural machine comprising at least one drive motor comprising a motor control, the drive motor driving at least the draw-in element and the at least one implement, and wherein the agricultural machine (1, 2) comprises at least one unit for measuring a motor speed (n_{M}) and a unit for displaying (33, 37) the motor speed (n_{M}) and a unit for measuring a traveling speed (v_{f}) and a unit for displaying (34, 36) the traveling speed (v_{f}) and a unit for measuring a harvested crop throughput (40), **characterized by** a control unit (38) which is configured for storing the motor speed (n_{M}), the traveling speed (v_{f}) and for determining and storing the maximum harvested crop throughput (40) and for varying the motor speed (n_{M}, 46) and the traveling speed (v_{f}) in such a way that a maximum harvested crop throughput (40) can be set by reducing the motor speed (n_{M}, 46) while concurrently increasing the traveling speed (v_{f}), wherein via the reduced motor speed (n_{M}, 46) a part load operating point (50) can be defined, the rpm range of which lies beneath the motor speed (n_{M}, 46) of the maximum motor power (Pₘₐₓ) defining the full load operating point (45).

8. The agricultural machine according to claim 7, **characterized in that** the control unit (38) is configured to output a traveling speed signal (V) for increasing the traveling speed and to output a motor speed signal (W) for reducing the motor speed (n_{M}).

9. The agricultural machine according to claim 7 or 8, **characterized in that** the control unit (38, 36) is coupled with the motor control (33) of the at least one drive motor (20) and the control (51) of the traveling drive (32) so as to allow data interchange.

10. The agricultural machine according to claim 9, **characterized in that** the motor control (33) is configured to transmit the motor speed (n_{M}) and fuel consumption.

11. The agricultural machine according to any of claims 7 to 10, **characterized in that** the control unit (38) is configured to display the motor speed (n_{M}), the traveling speed (v_{f}), and the determined maximum harvested crop throughput (40) in the display unit (37) and that operating levers (41, 42) for setting the traveling speed (v_{f}) and the motor speed (n_{M}, 46) of the drive motor (20) are present to be operated by the operator of the agricultural machine (1, 2).

12. The agricultural machine according to any of the preceding claims, **characterized in that** the agricultural machine (1, 2) comprises means (39, 53) for sensing the harvested crop throughput (Y, 40) and/or the fuel consumption (54) and that the control unit (38, 36) is configured to control the motor speed (n_{M}, 46) of the at least one drive motor (20) and the traveling speed (v_{f}) of the agricultural machine (1, 2) in dependence on generated harvested crop throughput and/or fuel consumption signals (Y, 40, 54).

13. The agricultural machine according to claim 12, **characterized in that** the controlling criterion is the operation of the agricultural machine (1, 2) at maximum harvested crop throughput (40).

## Revendications

1. Procédé de fonctionnement d'une machine agricole, en particulier d'une ensileuse, la machine agricole comprenant au moins un dispositif pour recueillir la récolte et la récolte recueillie étant transférée à au moins un dispositif d'alimentation qui transporte la récolte au moins à un dispositif de traitement de la récolte en aval, et la machine agricole comprenant au moins un moteur d'entraînement comprenant lui-même une commande de moteur, le moteur entraînant au moins le dispositif d'alimentation et au moins ledit dispositif de traitement,
**caractérisé en ce que**
le fonctionnement de la machine agricole (1, 2) s'obtient, pour un débit maximal de récolte (Y, 40), en réduisant le régime du moteur (n_{M}, 46) tout en augmentant la vitesse de marche (v_{f}), le régime réduit du moteur (n_{M}, 46) définissant un point de fonctionnement à charge partielle (50) dont la plage de régime est inférieure au régime du moteur (n_{M}, 46) de la puissance maximale du moteur (Pₘₐₓ) définissant le point de fonctionnement à pleine charge (45).

2. Procédé de fonctionnement d'une machine agricole, en particulier d'une ensileuse, selon la revendication 1,
**caractérisé en ce que**
le régime réduit du moteur (n_{M}, 46) est inférieur d'environ 10 à 15 % au régime (n_{M}, 46) de la puissance maximale du moteur (Pₘₐₓ).

3. Procédé de fonctionnement d'une machine agricole, en particulier d'une ensileuse, selon la revendication 1 ou 2,
**caractérisé en ce que**
la vitesse de marche (v_{f}) augmentée au point de fonctionnement à charge partielle (50) est supérieure de 20 à 30 % à la vitesse de marche (v_{f}) en fonctionnement au moins dudit moteur d'entraînement (20) au régime de la puissance maximale du moteur (Pₘₐₓ) définissant le point de fonctionnement à pleine charge (45).

4. Procédé de fonctionnement d'une machine agricole, en particulier d'une ensileuse, selon l'une quelconque des revendications précédentes,
**caractérisé en ce que**
le procédé comprend les étapes suivantes :
a.) Mesure du débit maximal de récolte (Y, 40) par fonctionnement de la machine agricole (1, 2) dans la plage de régime de la puissance de moteur maximale (Pₘₐₓ),
b.) Augmentation de la vitesse de marche (v_{f}) de la machine agricole (1, 2) tout en réduisant parallèlement le régime du moteur (n_{M}, 46),
c.) Répétition de l'étape b) jusqu'à ce que le débit de récolte maximal (Y, 40) mesuré à l'étape a) soit atteint.

5. Procédé de fonctionnement d'une machine agricole, en particulier d'une ensileuse, selon la revendication 4,
**caractérisé en ce que**
les étapes a) à c) sont exécutées automatiquement par une unité de commande et de réglage (38, 36).

6. Procédé de fonctionnement d'une machine agricole, en particulier d'une ensileuse, selon l'une quelconque des revendications précédentes,
**caractérisé en ce que**
le procédé est utilisé en particulier pour une récolte (5) de masse ou de densité élevée ou dont la taille des particules est importante.

7. Machine agricole, en particulier une ensileuse, la machine agricole comprenant au moins un dispositif pour recueillir la récolte et la récolte recueillie étant remise à au moins un dispositif d'alimentation qui transporte la récolte au moins à un dispositif de traitement de la récolte en aval et la machine agricole (1, 2) comprenant au moins un moteur d'entraînement comprenant lui-même une commande du moteur, lequel moteur entraîne au moins le dispositif d'alimentation et au moins ledit dispositif de traitement, et la machine agricole (1, 2) comprenant au moins une unité de mesure d'un régime de moteur (n_{M}) et un dispositif d'affichage (33, 37) du régime du moteur (n_{M}), une unité de mesure d'une vitesse de marche (v_{f}) et une unité d'affichage (34, 36) de la vitesse de marche (v_{f}) ainsi qu'un dispositif de mesure d'un débit de récolte (40), **caractérisée par** une unité de commande et de réglage (38), qui est conçue pour enregistrer le régime du moteur (n_{M}) et la vitesse de marche (v_{f}), pour mesurer et enregistrer le débit maximal de récolte (40) et pour modifier le régime du moteur (n_{M}, 46) et la vitesse de marche (v_{f}) de telle sorte qu'un débit maximal de récolte (40) est réglable en réduisant le régime du moteur (n_{M}, 46) et en augmentant parallèlement la vitesse de marche (v_{f}), un point de fonctionnement à charge partielle (50) pouvant être défini par le biais du régime réduit du moteur (n_{M}, 46), la plage du régime de ce point étant inférieure au régime (n_{M}, 46) de la puissance maximale du moteur (Pₘₐₓ) définissant le point de fonctionnement à pleine charge (45).

8. Machine agricole selon la revendication 7, **caractérisée en ce que** l'unité de commande et de réglage (38) est conçue pour donner un signal de vitesse de marche (V) dans le but d'augmenter la vitesse de marche, et pour donner un signal de régime du moteur (W) dans le but de réduire le régime du moteur (n_{M}).

9. Machine agricole selon la revendication 7 ou 8, **caractérisée en ce que** l'unité de commande et de réglage (38, 36) est reliée à la commande du moteur (33) au moins dudit moteur d'entraînement (20) et à une commande (51) de l'entraînement de marche (32) de telle sorte à échanger les données.

10. Machine agricole selon la revendication 9, **caractérisée en ce que** la commande du moteur (33) est conçue pour transmettre le régime du moteur (n_{M}) et une consommation en carburant.

11. Machine agricole selon l'une quelconque des revendications 7 à 10, **caractérisée en ce que** l'unité de commande et de réglage (38) est conçue pour afficher sur le dispositif d'affichage (37) le régime du moteur (n_{M}), la vitesse de marche (v_{f}) et le débit maximal de récolte (40), et **en ce que** sont présents des leviers de commande (41, 42) actionnables par le conducteur de la machine agricole (1, 2) pour régler la vitesse de marche (v_{f}) et le régime (n_{M}, 46) du moteur d'entraînement (20).

12. Machine agricole selon l'une quelconque des revendications précédentes, **caractérisée en ce que** la machine agricole (1, 2) comprend des moyens (39, 53) de détection du débit de récolte (Y, 40) et/ou de la consommation en carburant (54), et **en ce que** l'unité de commande et de réglage (38, 36) est conçue pour régler le régime (n_{M}, 46) au moins dudit moteur d'entraînement (20) et de la vitesse de marche (v_{f}) de la machine agricole (1, 2) indépendamment des signaux (Y, 40, 54) générés de débit de récolte et/ou de consommation en carburant.

13. Machine agricole selon la revendication 12, **caractérisée en ce que** le critère de réglage est le fonctionnement de la machine agricole (1, 2) pour un débit de récolte maximal (40).
